# EUROPÄISCHE PATENTSCHRIFT

(11) **EP 2 218 542 B1**
(45) Veröffentlichungstag und Bekanntmachung des Hinweises auf die Patenterteilung: **09.05.2012**
(21) Anmeldenummer: 10001396.0
(22) Anmeldetag: 11.02.2010
(51) Int. Cl.: B23Q 1/76, B23Q 17/20

(54) **Stabilisierungslünette**
Stabilisation support
Lunettes de stabilisation

(30) Priorität: 16.02.2009 DE 102009009056
(43) Veröffentlichungstag der Anmeldung: 18.08.2010
(73) Patentinhaber: Burgsmüller GmbH, 37547 Kreiensen (DE)
(72) Erfinder: Bläsche, Eckehard, 37547 Kreiensen (DE); Bläsche, Ralph, 37581 Bad Gandersheim (DE); Hiddessen, Ralf, 31275 Lehrte (DE)
(74) Vertreter: Wilhelm, Ludwig

(56) Entgegenhaltungen:
- CA-A1- 2 211 081
- DE-C- 365 403
- US-A- 4 176 461
- US-B1- 6 568 096

## Beschreibung

Die Erfindung betrifft eine Stabilisierungslünette, im folgenden auch kurz "Lünette" genannt, zum zentrischen Abstützen von in einer Rotationsbewegung zu bearbeitenden Werkstücken, beispielsweise Drehteilen oder Kurbelwellen, auf einer Drehachse mit einem ringförmigen, drehbar um sein Zentrum gelagerten Lünettenkörper, auch als Lünettenkreis bekannt, und mindestens zwei radial im Lünettenkörper angeordneten und darin verschiebbaren Pinolen zum Halten des Werkstücks im Zentrum des Lünettenkörpers. Die Erfindung betrifft außerdem eine Vorrichtung zur umlaufenden Bearbeitung von Werkstücken, beispielsweise Wirbelmaschinen oder Drehmaschinen, sowie ein Verfahren zum zentrischen Abstützen von Werkstücken mit einer entsprechenden Stabilisierungslünette.

Aufgrund der Länge von in einer Rotationsbewegung zu bearbeitenden Werkstücken ist es nötig, dass diese abgestützt werden müssen, um eine Durchbiegung zu verhindern bzw. Schwingungen zu reduzieren. Eine Möglichkeit zur Abstützung langer Werkstücke ist die Verwendung einer sogenannten Lünette. Die Lünette wird entlang der Drehachse des Werkstücks positioniert und das Werkstück wird so darin eingespannt und zentriert, dass es während der Drehbewegung auf der Drehachse gehalten wird. Bei bekannten Lünettensystemen, so z.B. in DE 102 09 371 A1, erfolgt das Einspannen und Zentrieren des Werkstücks über sogenannte Pinolen, welche radial im ringförmigen Lünettenkörper angeordnet und darin verschiebbar sind. Bei herkömmlichen Lünettensystemen ist dieser Vorgang jedoch sehr zeitaufwändig, da eine Vielzahl von Schritten notwendig ist. Dabei ist nicht nur eine Vorbearbeitung der einzuspannenden Werkstücke erforderlich - in dem Bereich, in dem die Lünette angesetzt werden soll, müssen die Werkstücke zunächst auf ein Basismaß gedreht werden -, sondern auch eine aufwändige Nachjustierung.

CA-2,211,081 offenbart eine Lünette nach dem oberbegriff des Anspruchs 1.

Der Erfindung liegt daher die Aufgabe zugrunde, eine schnelle und einfache Einspannung und Zentrierung von Werkstücken mit einer Lünette zu ermöglichen.

Gelöst wird diese Aufgabe mit einer Stabilisierungslünette nach Anspruch 1 mit einer Messvorrichtung zur Bestimmung der Werkstückdurchbiegung gegenüber der Drehachse sowie einer Hubvorrichtung zum vertikalen Verschieben des Lünettenkörpers zur Kompensation der Werkstückdurchbiegung. Ein entsprechendes Verfahren ist in Anspruch 5 angegeben. Vorteilhafte Weiterbildungen sind in den Unteransprüchen beschrieben.

Dabei liegt der Erfindung der Gedanke zugrunde, dass die Ablenkung des Werkstücks aufgrund der Gravitation lediglich in einer Richtung, nämlich der vertikalen Richtung, erfolgt, hier Werkstückdurchbiegung genannt, die es zu kompensieren gilt. Zu diesem Zweck wird an einer Einspannposition, einer Position entlang der Drehachse, an welcher das Werkstück in die Lünette eingespannt werden soll, die vertikale Abweichung des Werkstücks von dessen Drehachse - die Werkstückdurchbiegung - gemessen und die gesamte Lünette, um die gemessene Abweichung heruntergefahren. Befindet sich die Lünette an der Einspannposition, werden die Pinolen an das Werkstück herangefahren, ohne dieses aus seiner Position zu bringen, und festgeklemmt. Anschließend wird die Lünette wieder um die gemessene Abweichung hochgefahren, so dass das Werkstück nun auf der Drehachse zentriert gehalten wird.

In einer bevorzugten Ausgestaltung weist jede Pinole wenigstens einen axial im Pinolenkörper flexibel gelagerten Stift auf, welcher zum Halten des Werkstücks festklemmbar ist. Auf diese Weise kann die Auslenkung des einzuspannenden Werkstücks beim Heranfahren der Pinolen vermindert werden.

In einer weiteren bevorzugten Ausgestaltung ist die Hubvorrichtung als Hubkeil ausgestaltet. Hubkeile haben unter anderem den Vorteil, dass über ihre horizontale Auslenkung exakt die vertikale Auslenkung der Lünette gesteuert werden kann.

Die Erfindung löst somit nicht nur die oben genannte Aufgabe der schnellen und einfachen Einspannung und Zentrierung von Werkstücken, sondern hat darüber hinaus den Vorteil, dass auch Freiformen, wie beispielsweise unbearbeitete Schmiedeteile oder elliptische Querschnitte, eingespannt und zentriert werden können. Die aufwändige Vorbereitung von Werkstücken fällt weg.

Nachfolgend wird die Erfindung anhand eines Ausführungsbeispiels und unter Bezugnahme auf die Zeichnungen näher erläutert. Dabei sind gleiche Elemente mit gleichen Bezugszeichen versehen. Es zeigen:
- Fig. 1: einen Querschnitt einer erfindungsgemäßen Stabilisierungslünette;
- Fig. 2: einen vergrößerten Darstellung einer in Fig. 1 gezeigten Pinole;
- Fig. 3: eine stilisierte Darstellung einer erfindungsgemäßen Stabilisierungslünette mit einem nicht eingespannten Werkstück;
- Fig. 4: eine stilisierte Darstellung einer erfindungsgemäßen Stabilisierungslünette mit einem eingespannten Werkstück;
- Fig. 5: eine stilisierte Darstellung einer erfindungsgemäßen Stabilisierungslünette mit einem eingespannten und auf der Drehachse zentrierten Werkstück;
- Fig. 6: eine spezielle Ausgestaltung einer Hubvorrichtung einer erfindungsgemäßen Stabilisierungslünette mit geringem Hub;
- Fig. 7: eine spezielle Ausgestaltung einer Hubvorrichtung einer erfindungsgemäßen Stabilisierungslünette mit größerem Hub;
- Fig. 8: eine Kurbelwellenmaschine mit einer erfindungsgemäßen Stabilisierungslünette in Ausgangsposition;
- Fig. 9: eine Kurbelwellenmaschine mit einer erfindungsgemäßen Stabilisierungslünette in Einspannposition.

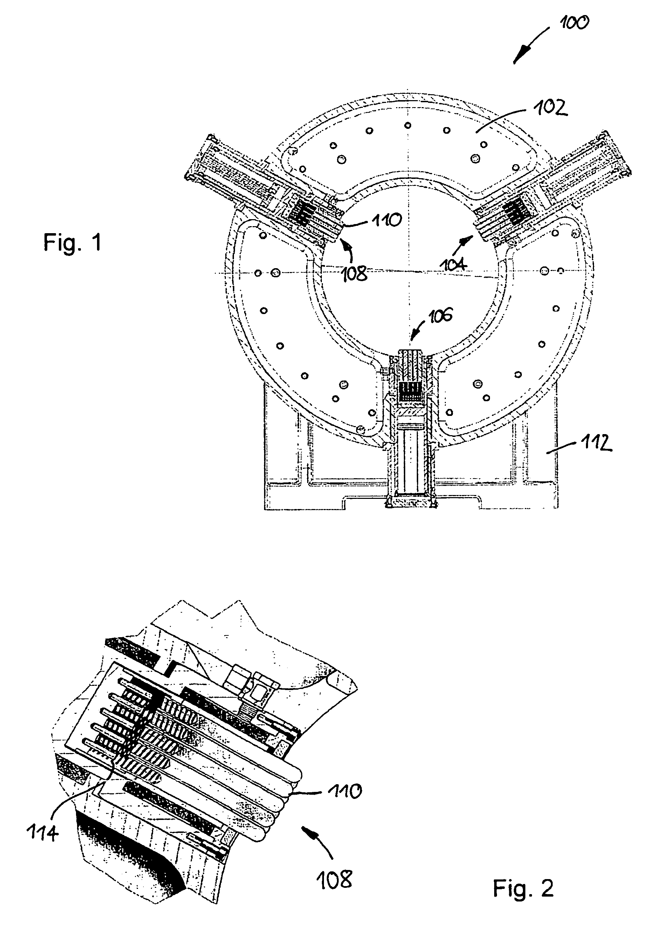

Fig. 1 zeigt eine erfindungsgemäße Stabilisierungslünette 100 mit einem ringförmigen, drehbar um seinen Mittelpunkt gelagerten Lünettenkörper 102, radial in dem Lünettenkörper angeordneten und darin verschiebbaren Pinolen 104, 106, 108 und einem Lünettenstativ 112, welches den Lünettenkörper drehbar hält. Dabei wird eine spielfreie Lagerung des Lünettenkörpers über verspannte Schrägkugellager bevorzugt. Diese gewährleisten einen sehr guten Rundlauf des Lünettenkörpers. Durch eine größere Verspannung der Schrägkugellager kann außerdem eine Bremswirkung erzeugt werden, die als Drehmomentstütze wirkt.

Eine Anordnung von drei Pinolen, wie sie in Fig. 1 dargestellt ist, kann als vorteilhaft angesehen werden. Jedoch kann auch eine beliebige andere Zahl an Pinolen vorgesehen sein, die der Lünettenkörper aufnehmen kann, mindestens jedoch zwei. Dabei müssen die Pinolen so über den Umfang des Lünettenkörpers verteilt sein, dass sie ein Werkstück im Zentrum des Lünettenkörpers halten können.

Die Pinolen sind im Lünettenkörper radial verschiebbar gelagert. Das Verschieben der Pinolen kann manuell, vorzugsweise jedoch automatisch mittels einer Steuereinrichtung erfolgen. Die Pinolen werden vorzugsweise hydraulisch und/oder pneumatisch angesteuert. Die Ansteuerung kann für alle Pinolen gemeinsam erfolgen oder für jede Pinole separat. Vorzugsweise handelt es sich um zylindrische Pinolen mit handelsüblichen Spannbuchsen.

In dem dargestellten Ausführungsbeispiel weist jede Pinole eine Vielzahl von Stiften 110 auf, welche den Pinolenkopf bilden. Dies ist auch in Fig. 2 verdeutlicht, welche einen Ausschnitt der in Fig. 1 dargestellten Lünette 100 mit einer Pinole 108 zeigt. Die Stifte 110 sind flexibel gelagert, beispielsweise mittels Federn 114, so dass sie sich beim Heranfahren der Pinole an ein Werkstück formschlüssig an dessen Oberfläche legen, ohne das zu klemmende Werkstück aus seiner ursprünglichen Lage zu bewegen. Das Festklemmen der Stifte in der angelegten Position erfolgt von außen durch ein hydraulisches Dehn-Spann-System oder eine andere Klemmvorrichtung, welche die Stifte in ihrer Position hält. Das eingespannte Werkstück wird somit formschlüssig gehalten. Dies hat den Vorteil, dass die Spannstelle nicht vorbearbeitet sein muss, und somit ist die Positionierung der Stabilisierungslünette entlang der Drehachse des Werkstücks frei wählbar. Außerdem wird aufgrund des Formschlusses eine steifere Lagerung des Werkstücks als bei herkömmlichen Lünetten erreicht. Dies führt zu einer größeren Steifigkeit im Schnittverhalten - die Schwingungsanregung bei der Bearbeitung wird minimiert - und hat somit höhere Werkzeugstandzeiten zur Folge.

Die Pinolen können das Werkstück auch kraftschlüssig halten. Dies ist vor allem sinnvoll, wenn die Stabilisierungslünette als Mittenantrieb eingesetzt wird.

Die Stifte können an ihren axialen Enden, die sich an die Oberfläche des Werkstücks legen, beispielsweise eine runde Form, wie in Fig. 2, oder eine spitze Form aufweisen. Diese haben den Vorteil, dass sie sich gut an die Oberflächenkonturen anlegen. Grundsätzlich ist jedoch auch jede andere Form möglich.

In einer weiteren alternativen Ausgestaltung kann statt einer Vielzahl von Stiften pro Pinole auch eine Vielzahl von Pinolen mit jeweils nur einem oder wenigen Stiften im Lünettenkörper angeordnet sein. Der Durchmesser der Pinolen kann variieren. Je nach Form des einzuspannenden Werkstücks kann eine geringere oder eine größere Anzahl an Stiften oder Pinolen erforderlich sein, um das Werkstück zu halten.

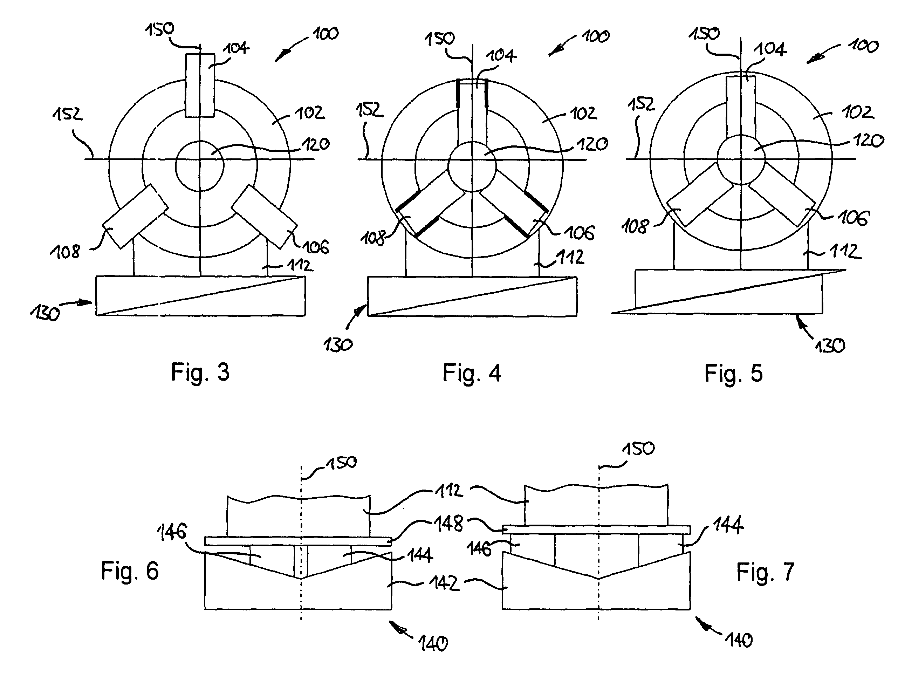

Figuren 3 - 5 zeigen stilisierte Darstellungen der erfindungsgemäßen Stabilisierungslünette zu verschiedenen Zeitpunkten des Einspann- und Zentrierungsprozesses. Die Figuren zeigen wieder jeweils die erfindungsgemäße Stabilisierungslünette 100 mit einem Lünettenkörper 102, Pinolen 104, 106, 108 und einem Lünettenstativ 112. Die Figuren zeigen darüber hinaus eine Hubvorrichtung 130, auf welcher das Lünettenstativ angebracht ist, und ein einzuspannendes Werkstück 120. Außerdem sind eine vertikale Achse 150 und eine horizontale Achse 152 eingezeichnet, deren Schnittpunkt auf der Drehachse des Werkstücks liegt.

Mittels einer in den Zeichnungen nicht dargestellten Messvorrichtung wird zunächst die Werkstückdurchbiegung an einer Einspannposition, an der das Werkstück vertikal nach unten von der Drehachse abgelenkt ist, ermittelt. Dies kann beispielsweise über optische Messungen erfolgen, indem die Auslenkung an der Einspannposition zu zwei Zeitpunkten gemessen wird - in der ursprünglichen Position des Werkstücks und in einer um 180 Grad um die Drehachse gedrehten Position des Werkstückes - und der Mittelwert dieser beiden Messungen die Werkstückdurchbiegung ergibt. Dies kann ebenfalls von der Steuereinrichtung realisiert werden.

Anschließend wird der Lünettenkörper um die ermittelte Werkstückdurchbiegung heruntergefahren, also vertikal nach unten verschoben. Das Messen der Werkstückdurchbiegung und das Herunterfahren des Lünettenkörpers können unabhängig voneinander an der Einspannposition oder einer beliebigen anderen Position erfolgen.

Fig. 3 zeigt die erfindungsgemäße Lünette 100 an der Einspannposition. Das Werkstück befindet sich, wie in Fig. 3 angedeutet, außerhalb der Drehachse, jedoch im Zentrum des Lünettenkörpers. In dieser Position wird das Werkstück 120 nun eingespannt.

Beim Einspannen werden die Pinolen, vorzugsweise automatisch, so an das Werkstück herangefahren und angelegt, dass eine möglichst geringe Auslenkung des zu klemmenden Werkstücks aus seiner ursprünglichen Lage erfolgt. Fig. 4 zeigt die erfindungsgemäße Lünette an der Einspannposition mit einem eingespannten Werkstück noch außerhalb der Drehachse. Vorzugsweise erfolgt das Einspannen des Werkstücks, indem das Werkstück von den Pinolen zunächst mit geringem Druck eingeschlossen wird, wieder etwas entspannt wird und mit höherem Druck wieder eingeschlossen wird, worauf die Pinolen festgeklemmt werden, wie es in Fig. 4 durch die schwarzen Balken angedeutet ist.

Fig. 5 zeigt nun die erfindungsgemäße Lünette 100 an der Einspannposition mit dem eingespannten und auf der Drehachse zentrierten Werkstück. Zum Zentrieren, also Anheben des Werkstücks auf der vertikalen Achse auf das Niveau der Drehachse, weist die Lünette eine Hubvorrichtung 130 auf. Mittels der Hubvorrichtung kann die Durchbiegung des Werkstücks kompensiert werden. Nachdem am Beginn des Einspannprozesses die Lünette um die gemessene Werkstückdurchbiegung vertikal heruntergefahren wurde, wird sie nun mit dem eingespannten Werkstück wieder um die gemessene Werkstückdurchbiegung hochgefahren, also in vertikaler Richtung nach oben verschoben, und so auf der Drehachse zentriert.

Vorzugsweise, wie in den Figuren 3 - 5 dargestellt, handelt es sich bei der Hubvorrichtung um Hubkeile. Durch die horizontale Verschiebung der Hubkeile gegeneinander kann die Höhe der Lünette eingestellt werden. Dabei darf jedoch die horizontale Position der Lünette nicht verändert werden, sondern muss gegenüber der vertikalen Achse 150 gleich bleiben. Hubkeile haben den Vorteil, dass über ihre horizontale Auslenkung exakt die vertikale Auslenkung der Lünette gesteuert werden kann. Befindet sich das Werkstück zentriert auf der Drehachse, werden die Hubkeile - vorzugsweise hydraulisch - festgeklemmt. Alternativ kann die Hubvorrichtung beispielsweise auch als vertikal verfahrbarer Schlitten ausgestaltet sein.

Rotiert das Werkstück nun um die Drehachse, dreht die Lünette passiv mit und hält das Werkstück an der Einspannposition auf der Drehachse.

Fig. 6 und 7 zeigen eine spezielle Ausgestaltung einer Hubvorrichtung 140 mit einer Art Doppelkeil. Die Hubvorrichtung 140 weist ein Keilbett 142, Hubkeile 144, 146 sowie einen Auflageblock 148 auf. Das Keilbett 142 weist an seiner Oberseite eine Ausnehmung in Form eines gleichschenkeligen Dreiecks auf, dessen von den symmetrischen Schenkeln eingeschlossene Spitze auf der vertikalen Achse 150 liegt. Die Hubkeile 144, 146 sind so ausgebildet, dass sie jeweils das Gegenstück zu einem der beiden Schenkel des Keilbettes bilden. Gegenüber der vertikalen Achse 150 sind die Hubkeile zueinander spiegelsymmetrisch ausgebildet und angeordnet. Auf den Hubkeilen ist der Auflageblock 148 so angeordnet, dass er bei einer Verschiebung der Hubkeile, die sowohl gegenüber dem Keilbett als auch gegenüber dem Auflageblock verschiebbar sind, seine Position gegenüber der vertikalen Achse 150 beibehält. Auflageblock und Keilbett behalten ihre horizontale Position zueinander bei. Werden die Hubkeile nun gegenläufig verschoben, hebt oder senkt sich der Auflageblock 148 gleichmäßig und mit ihm die gesamte Lünette, hier durch das auf dem Auflageblock angeordnete Lünettenstativ 112 angedeutet. In Fig. 6 ist erkennbar, dass sich die Hubkeile 144, 146 nahe der vertikalen Achse 150 befinden und somit nur ein geringer Hub vorhanden ist, während in Fig. 7 die Hubkeile weiter von der vertikalen Achse 150 entfernt sind und somit eine größere Anhebung verursachen.

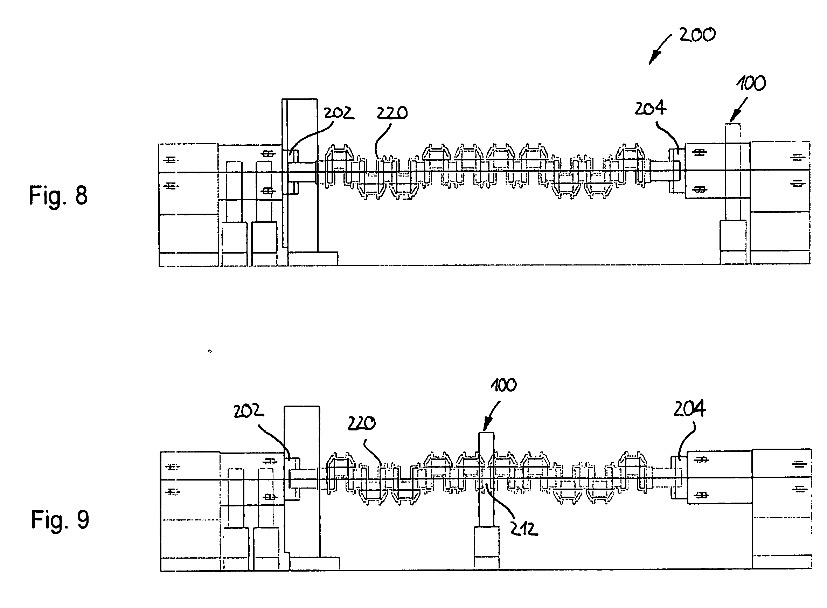

Figuren 8 und 9 zeigen nun eine Vorrichtung zur umlaufenden Bearbeitung von Werkstücken 200, hier eine Kurbelwellenmaschine, mit einer erfindungsgemäßen Stabilisierungslünette 100. Kurbelwellen werden in Freiform geschmiedet und müssen dann nachbearbeitet werden. Dies erfolgt beispielsweise auf einer Kurbelwellenmaschine wie in Fig. 8 und 9 dargestellt.

Die Kurbelwellenmaschine 200 weist eine erste Spanneinheit 202 und eine zweite Spanneinheit 204 zum Einspannen einer Kurbelwelle 210 auf. Während Fig. 8 die Kurbelwellenmaschine 200 mit der Lünette 100 in einer neutralen, nicht abstützenden Ausgangsposition zeigt, befindet sich in Fig. 9 die Lünette 100 an einer Einspannposition entlang der Drehachse der Kurbelwelle 210.

Bei der Kurbelwellenmaschine 200 mit der erfindungsgemäßen Lünette 100 wird die geschmiedete, unbearbeitete Kurbelwelle mit ihren Enden in den Spanneinheiten 202, 204 eingespannt. Die Lünette 100 befindet sich, wie in Fig. 8 dargestellt, zunächst in neutraler Ausgangsposition. Um die Lünette zum Abstützen der Kurbelwelle an einer Einspannposition zu positionieren, wird sie entlang der Drehachse auf dem Maschinenfutter der Kurbelwellenmaschine verfahren. Als Einspannposition wird ein Mittenlager 212 der Kurbelwelle gewählt, wie in Fig. 9 dargestellt. Nun erfolgt das Einspannen der Kurbelwelle, wie bereits zu Figuren 3 - 5 erläutert. Dabei wird zunächst die Durchbiegung der Kurbelwelle festgestellt, worauf die Lünette mittels der Hubvorrichtung heruntergefahren wird. Anschließend werden die Pinolen an die Kurbelwelle herangefahren, ohne diese aus ihrer ursprünglichen Lage zu bewegen, und festgeklemmt, so dass die Kurbelwelle am Mittenlager formschlüssig von den Pinolen gehalten wird. Schließlich wird die Lünette wieder um die gemessene Durchbiegung der Kurbelwelle hochgefahren, so dass das Mittenlager der Kurbelwelle zentrisch auf der Drehachse ausgerichtet ist. Während die Kurbelwelle um die Drehachse rotiert, dreht die Lünette passiv mit und hält die Kurbelwelle an der Einspannposition auf der Drehachse.

In einer alternativen Ausgestaltung kann die erfindungsgemäße Lünette mit einem entsprechenden Antriebsaggregat auch als Mittenantrieb eingesetzt werden.

Vorzugsweise läuft der gesamte Prozess des Positionierens der Lünette und des Einspannens und Zentrierens des Werkstücks automatisch ab und wird von einer Steuereinrichtung gesteuert.

Die erfindungsgemäße Stabilisierungslünette ermöglicht also ein schnelles und einfaches Einspannen und Zentrieren von Werkstücken auf der Drehachse. Außerdem kann der gesamte Vorgang automatisch gesteuert werden und es ist möglich, auch freie Formen zu bearbeiten. Ein Nachjustieren ist nicht erforderlich. Die erfindungsgemäße Stabilisierungslünette weist somit ein hohes Potenzial zur Einsparung von Zeit und Kosten auf und kann somit profitabel in der Produktion eingesetzt werden.

### Bezugszeichenliste

- 100: Stabilisierungslünette
- 102: Lünettenkörper
- 104: Pinole
- 106: Pinole
- 108: Pinole
- 110: Stifte
- 112: Lünettenstativ
- 114: Feder
- 120: Werkstück
- 130: Hubvorrichtung
- 140: Hubvorrichtung
- 142: Keilbett
- 144: Hubkeil
- 146: Hubkeil
- 148: Auflageblock
- 150: vertikale Achse
- 152: horizontale Achse
- 200: Kurbelwellenmaschine
- 202: erste Spanneinheit
- 204: zweite Spanneinheit
- 212: Mittenlager der Kurbelwelle
- 220: Kurbelwelle

## Patentansprüche

1. Stabilisierungslünette (100) zum zentrischen Abstützen von in einer Rotationsbewegung zu bearbeitenden Werkstücken (120) auf einer Drehachse mit
einem ringförmigen, drehbar um sein Zentrum gelagerten Lünettenkörper (102), mindestens zwei radial im Lünettenkörper (102) angeordneten und darin verschiebbaren Pinolen (104, 106, 108) zum Halten des Werkstücks (120) im Zentrum des Lünettenkörpers (102), **gekennzeichnet durch**
eine Messvorrichtung zur Bestimmung der Werkstückdurchbiegung gegenüber der Drehachse sowie
eine Hubvorrichtung (130) zum vertikalen Verschieben des Lünettenkörpers (102) zur Kompensation der Werkstückdurchbiegung.

2. Stabilisierungslünette nach Anspruch 1, wobei jede Pinole (104, 106, 108) wenigstens einen axial im Pinolenkörper flexibel gelagerten und zum Halten des Werkstückes festklemmbaren Stift (110) aufweist.

3. Stabilisierungslünette nach einem der vorhergehenden Ansprüche, wobei die Hubvorrichtung (130) als Hubkeil ausgestaltet ist.

4. Vorrichtung zur umlaufenden Bearbeitung von Werkstücken (200) mit einer Stabilisierungslünette (100) nach einem der vorhergehenden Ansprüche.

5. Verfahren zum zentrischen Abstützen von Werkstücken mit einer Stabilisierungslünette nach einem der Ansprüche 1 bis 3 umfassend
Messen der Werkstückdurchbiegung gegenüber der Drehachse des Werkstücks an einer Einspannposition auf der Drehachse,
Verschieben des Lünettenkörpers in vertikaler Richtung um die gemessene Werkstückdurchbiegung,
Positionieren der Stabilisierungslünette an der Einspannposition,
Anlegen der Pinolen an das Werkstück,
Klemmen der Pinolen in der angelegten Position,
Verschieben des Lünettenkörpers in vertikaler Richtung um die gemessene Werkstückdurchbiegung zur Kompensation der Werkstückdurchbiegung.

## Claims

1. A stabilisation support (100) for the centric supporting of workpieces (120), to be processed in a rotational movement, on a rotation axis with an annular support body (102) rotatably mounted about its centre,
at least two sleeves (104, 106, 108) arranged radially in the support body (102) and displaceable therein for holding the workpiece (102) in the centre of the support body (102),
**characterized by**
a measuring device for determining the workpiece deflection with respect to the rotation axis and a lifting device (130) for the vertical displacement of the support body (102) for compensation of the workpiece deflection.

2. The stabilisation support according to Claim 1, wherein each sleeve (104, 106, 108) has at least one pin (110) which is flexibly mounted axially in the sleeve body and is able to be clamped for holding the workpiece.

3. The stabilisation support according to one of the preceding claims, wherein the lifting device (130) is embodied as a lifting wedge.

4. A device for the rotary processing of workpieces (200) with a stabilisation support (100) according to one of the preceding claims.

5. A method for the centric supporting of workpieces with a stabilisation support according to one of Claims 1 to 3, comprising
measuring the workpiece deflection with respect to the rotation axis of the workpiece at a clamping position on the rotation axis,
displacing the support body in vertical direction by the measured workpiece deflection,
positioning the stabilisation support at the clamping position,
applying the sleeves onto the workpiece,
clamping the sleeves in the applied position, displacing the support body in vertical direction by the measured workpiece deflection for compensation of the workpiece deflection.

## Revendications

1. Lunettes de stabilisation (100) pour appuyer de manière centréesur un axe rotatif,des pièces (120) à usiner dans un mouvement de rotation, comprenant un corps de lunette (102) annulaire disposé de manière à pouvoir tourner sur son centre,
au moins deux fourreaux (104, 106, 108) disposés radialement dans le corps de lunette (102) et pouvant être déplacés dedans pour maintenir la pièce (120) au centre du corps de lunette (102), **caractérisé par**
un dispositif de mesure pour déterminer la courbure de la pièce par rapport à l'axe rotatif ainsi
qu'un dispositif de levage (130) pour déplacer le corps de lunette (102) verticalement afin de compenser la courbure de la pièce.

2. Lunettes de stabilisation selon la revendication 1, dans lesquelles chaque fourreau (104, 106, 108) présente au moins une tige (110) disposée axialement et de manière flexible dans le corps du fourreau et pouvant être bloquée pour maintenir la pièce.

3. Lunettes de stabilisation selon la revendication 1 ou 2, dans lesquelles le dispositif de levage (130) est formé comme une cale de levage.

4. Dispositif pour l'usinage circulaire de pièces (200) avec des lunettes de stabilisation (100) selon l'une des revendications précédentes.

5. Procédé pour appuyer de manière centrée des pièces avec des lunettes de stabilisation selon l'une des revendications 1 à 3 comprenant
la mesure de la courbure de la pièce par rapport à l'axe de rotation de la pièce dans une position de serrage sur l'axe rotatif,
ladéplacement des lunettes de stabilisation dans le sens vertical,sur la courbure de pièce mesurée, le positionnement des lunettes de stabilisation dans la position de serrage,
le placement des fourreaux sur la pièce,
le serrage des fourreaux dans la position réglée, ladéplacement des lunettes de stabilisation dans le sens vertical,sur la courbure de pièce mesurée, pour compenser la courbure de la pièce.
